# EUROPÄISCHE PATENTSCHRIFT

(11) **EP 3 352 940 B1**
(45) Veröffentlichungstag und Bekanntmachung des Hinweises auf die Patenterteilung: **15.12.2021**
(21) Anmeldenummer: 16766978.7
(22) Anmeldetag: 20.09.2016
(51) Int. Cl.: B23K 26/26, B23K 26/322, B32B 15/01, B23K 35/30

(54) **LASERSCHWEISSVERFAHREN ZUR HERSTELLUNG EINES BLECHHALBZEUGS AUS HÄRTBAREM STAHL MIT EINER BESCHICHTUNG AUF ALUMINIUM- ODER ALUMINIUM-SILIZIUM-BASIS**
METHOD OF LASER WELDING FOR PRODUCING A SEMI-FINISHED SHEET OF HARDENABLE STEEL WITH A COATING OF ALUMINIUM OR ALUMINIUM-SILICON BASE
PROCÉDÉ DE SOUDAGE PAR LASER POUR LA PRODUCTION D'UNE PLAQUE SEMI-FINIE EN ACIER DURCISSABLE AVEC UN REVETEMENT BASÉ SUR ALUMINIUM OU ALUMINIUM-SILICIUM

(30) Priorität: 21.09.2015 DE 102015115915
(43) Veröffentlichungstag der Anmeldung: 01.08.2018
(73) Patentinhaber: Baosteel Tailored Blanks GmbH, 47259 Duisburg (DE)
(72) Erfinder: BREUER, Arndt, 51465 Bergisch Gladbach (DE); BOTH, Christian, 47059 Duisburg (DE)
(74) Vertreter: Cohausz & Florack
(86) Internationale Anmeldenummer: PCT/EP2016/072213
(87) Internationale Veröffentlichungsnummer: WO 2017/050711

(56) Entgegenhaltungen:
- WO-A1-2013/014481
- DE-B3-102012 111 118

## Beschreibung

Die Erfindung betrifft ein Verfahren zur Herstellung eines maßgeschneiderten warmumformbaren Blechhalbzeugs, bei dem mindestens zwei Stahlbleche unterschiedlicher Werkstoffgüte und/oder Dicke im Stumpfstoß durch Laserschweißen gefügt werden, wobei mindestens eines der Bleche aus presshärtbarem Stahl gefertigt ist und eine metallische Beschichtung auf Aluminium- oder Aluminium-Silizium-Basis aufweist, wobei das Laserschweißen unter Zuführen von Zusatzdraht in die ausschließlich mittels mindestens eines Laserstrahls erzeugte Schweißschmelze erfolgt, wobei der Zusatzdraht im Wesentlichen aluminiumfrei ist und mindestens ein die Bildung von Austenit begünstigendes Legierungselement enthält, das mit einem um mindestens 0,1 Gew.-% größeren Massenanteil im Zusatzdraht vorhanden ist als in dem presshärtbaren Stahl.

Maßgeschneiderte Platinen aus Stahlblech (sogenannte Tailored Blanks) werden im Automobilbau verwendet, um hohe Anforderungen an die Crashsicherheit bei möglichst geringem Karosseriegewicht zu erfüllen. Hierzu werden einzelne Platinen oder Bänder unterschiedlicher Werkstoffgüte und/oder Blechdicke im Stumpfstoß durch Laserschweißen zusammengefügt. Auf diese Weise können verschiedene Stellen eines Karosseriebauteils an unterschiedliche Belastungen angepasst werden. So können an Stellen mit hoher Belastung dickeres oder auch höherfestes Stahlblech und an den übrigen Stellen dünnere Bleche oder auch Bleche aus relativ weichen Tiefziehgüten eingesetzt werden. Durch solche maßgeschneiderten Blechplatinen werden zusätzliche Verstärkungsteile an der Karosserie überflüssig. Das spart Material und ermöglicht, das Gesamtgewicht der Karosserie zu reduzieren.

Im modernen Karosseriebau werden Mangan-Bor-Stähle verwendet, die beim Wärmumformen mit rascher Abkühlung hohe, Festigkeiten, beispielsweise Zugfestigkeiten im Bereich von 1500 bis 2000 MPa erreichen. Im Ausgangszustand haben Mangan-Bor-Stähle typischerweise ein ferritisch-perlitisches Gefüge und besitzen eine Zugfestigkeit von ca. 600 MPa. Durch Presshärten, d.h. durch Erwärmen auf Austenitisierungstemperatur und anschließendes rasches Abkühlen kann jedoch ein martensitisches Gefüge eingestellt werden, so dass die so behandelten Stähle Zugfestigkeiten im Bereich von 1500 bis 2000 MPa erreichen können.

Unter anderem aus Gründen des Korrosionsschutzes werden Stahlbleche mit einer metallischen Korrosionsschutzschicht beschichtet. Presshärtbares Stahlblech zur Herstellung von Tailored Blanks ist üblicherweise mit einer metallischen Beschichtung auf Aluminium-Silizium-Basis versehen. Die metallische Beschichtung setzt sich dabei aus einer inneren Schicht einer intermetallischen Legierung und einer äußeren Schicht einer metallischen Legierung zusammen. Mit der Verwendung solcher beschichteter Stahlbleche sind jedoch erhebliche Schwierigkeiten verbunden. Denn beim Schweißen der beschichteten Stahlplatinen gelangt ein Teil der AlSi-Beschichtung in die am Fügestoß erzeugte Schweißschmelze und kann spröde intermetallische Phasen oder ferritische Zonen bilden, die auch nach Austenitisierung und Abschrecken der Platine noch vorhanden sind. An diesen intermetallischen oder ferritischen Zonen kommt es bei einer späteren mechanischen Belastung unter statischen oder dynamischen Bedingungen mitunter zu einem Versagen bzw. Bruch der Schweißnaht. Um ein Einfließen eines Teils der AlSi-Beschichtung in die Schweißschmelze zu vermeiden, wurde bereits vorgeschlagen, den Randbereich der zu verschweißenden Platinenkante vor dem Schweißen zu entschichten. Dieser zusätzliche Prozessschritt ist jedoch sehr kosten- und zeitintensiv.

In der EP 2 007 545 B1 wird vorgeschlagen, von der AlSi-Beschichtung lediglich die äußere, metallische Legierungsschicht zu entfernen, die relativ einfach durch Bürsten oder mittels eines Laserstrahl abgetragen werden kann. Die demgegenüber viel dünnere, schwieriger zu entfernende intermetallische Legierungsschicht wird dabei auf dem zu verschweißenden Stahlblech belassen. Jedoch ist auch diese Teilentschichtung kosten- und zeitintensiv. Ferner kann beim Verschweißen von gemäß der EP 2 007 545 B1 teilentschichteten Stahlplatinen noch soviel Aluminium aus der intermetallischen Legierungsschicht in die Schweißschmelze gelangen, dass mitunter eine Verringerung der Härtbarkeit der Schweißnaht beobachtet wurde.

Zudem führt das Laserschweißen von Tailored Blanks teilweise zu einer Verringerung des tragenden Blechquerschnitts. Aufgrund des Schnittspalts, der beim Zuschneiden des zu verschweißenden Stahlblechs entsteht, ergeben sich bei der Schweißnaht teilweise ein Decklageneinfall und/oder ein Schweißwurzelrückfall. Diese Problematik besteht vor allem bei Blechkombinationen mit gleicher Blechdicke und unterschiedlicher Werkstoffgüte. Anders als bei Tailored Blanks für die Kaltumformung weist die Schweißnaht von Tailored Blanks für die Warmumformung nach der Wärmebehandlung im Ofen und Abschreckung keine erhöhte Festigkeit gegenüber dem Stahlwerkstoff der Bleche auf. Bei Tailored Blanks für die Kaltumformung kann diese Festigkeitserhöhung den Einfluss des reduzierten Blechquerschnitts ausgleichen. Dies ist bei Tailored Blanks für die Warmumformung herkömmlicherweise nicht möglich.

Aus der EP 1 878 531 B1 ist ein Laser-Lichtbogen-Hybridschweißverfahren bekannt, bei dem Platinen aus Mangan-Bor-Stahl, die eine Aluminium enthaltende Beschichtung aufweisen, im Stumpfstoß miteinander verbunden werden, wobei der Laserstrahl mit mindestens einem elektrischen Lichtbogen kombiniert wird, um das Metall am Stumpfstoß aufzuschmelzen und die Platinen miteinander zu verschweißen. Der Lichtbogen wird dabei mittels einer Wolfram-Schweißelektrode abgegeben oder bildet sich bei Verwendung eines MIG-Schweißbrenners an der Spitze eines Zusatzdrahtes. Der Zusatzdraht kann Legierungselemente (z.B. Mn und Ni) enthalten, welche eine austenitische Umwandlung des Schweißnahtgefüges und somit die Härtbarkeit begünstigen. Mit diesem Hybridschweißverfahren soll erreicht werden, dass warmumformbare Platinen aus Mangan-Bor-Stahl, die mit einer Beschichtung auf Aluminium-Silizium-Basis versehen sind, ohne vorherige Entfernung des Beschichtungsmaterials im Bereich der herzustellenden Schweißnaht verschweißt werden können, wobei aber dennoch sichergestellt sein soll, dass an den Stoßkanten der Platinen befindliches Aluminium nicht zu einer Herabsetzung der Zugfestigkeit des Bauteils in der Schweißnaht führt. Durch das Vorsehen eines elektrischen Lichtbogens hinter dem Laserstrahl sollen die Schweißschmelze homogenisiert und dadurch örtliche Aluminiumkonzentrationen größer 1,2 Gew.-%, die ein ferritisches Gefüge erzeugen, eliminiert werden.

Das Laserstrahl-Lichtbogen-Hybridschweißverfahren ist jedoch vergleichsweise langsam und hinsichtlich des Energieverbrauchs aufgrund der Erzeugung des zusätzlichen Lichtbogens aufwendig. Außerdem erzeugt dieses Verfahren eine sehr breite Schweißnaht mit einer starken Naht- und Wurzelüberhöhung.

Des Weiteren ist aus der auf die Anmelderin zurückgehenden DE 10 2012 111 118 B3 ein Verfahren zum Laserschweißen von Werkstücken aus Mangan-Bor-Stahl (MnB-Stahl) im Stumpfstoß bekannt, bei dem die Werkstücke eine Dicke von mindestens 1,8 mm aufweisen und/oder an dem Stumpfstoß ein Dickensprung von mindestens 0,4 mm entsteht, und bei dem das Laserschweißen unter Zuführen von Zusatzdraht in die ausschließlich mit einem Laserstrahl erzeugte Schweißschmelze erfolgt. Um sicherzustellen, dass sich die Schweißnaht beim Warmumformen zuverlässig in ein martensitisches Gefüge aufhärten lässt, ist bei diesem Verfahren vorgesehen, dass der Zusatzdraht mindestens ein Legierungselement aus der Mangan, Chrom, Molybdän, Silizium und/oder Nickel umfassenden Gruppe enthält, das die Bildung von Austenit in der Schweißschmelze begünstigt, wobei dieses Legierungselement mit einem um mindestens 0,1 Gew.-% größeren Massenanteil im Zusatzdraht vorhanden ist als in dem presshärtbaren Stahl der Werkstücke. Die Werkstücke können dabei eine metallische Beschichtung auf Aluminium- oder Aluminium-Silizium-Basis aufweisen, die am Rand entlang der zu verschweißenden Stoßkanten vor dem Laserschweißen entfernt wird. Ferner ist bei diesem Verfahren vorgesehen, dass der Zusatzdraht vor dem Zuführen in die Schweißschmelze zumindest in einem Längenabschnitt auf eine Temperatur von mindestens 50°C erwärmt wird. Das Verfahren hat sich in der Praxis bewährt. Das Entfernen der metallischen Beschichtung am Rand der zu verschweißenden Stahlbleche mittels Laserstrahlung oder mechanischer Abtragung ist jedoch sehr kosten- und zeitintensiv.

Die US 2015/0043962 A1 (Basis für den Oberbegriff des Anspruchs offenbart ein Laserschweißverfahren zur Herstellung von Tailored Blanks aus presshärtbaren Stahlblechen mit einer Beschichtung auf Aluminium- oder Al-Si-Basis, wobei die Stahlbleche ohne Entschichten der Randbereiche ihrer miteinander zu verschweißenden Blechkanten unter Einstellung eines Spaltes mit einer Spaltbreite im Bereich von 0,1 bis 0,4 mm und unter Verwendung von Zusatzdraht gefügt werden. Der Zusatzdraht enthält dabei ein die Härtbarkeit der Schweißnaht erhöhendes Legierungselement, beispielsweise Kohlenstoff und Mangan, das mit einem größeren Massengehalt im Zusatzdraht als in dem presshärtbaren Stahl vorhanden ist.

Der Erfindung liegt die Aufgabe zugrunde, ein Laserschweißverfahren anzugeben, mit dem Stahlbleche unterschiedlicher Werkstoffgüte und/oder Dicke, von denen mindestens ein Blech aus presshärtbarem Stahl gefertigt ist und eine metallische Beschichtung auf Aluminium- oder Aluminium-Silizium-Basis aufweist, im Stumpfstoß gefügt werden können, deren Schweißnaht sich beim Warmumformen (Presshärten) zuverlässig in ein martensitisches Gefüge (z.B. bei einer MnB-MnB-Verbindung) oder ein Mischgefüge (z.B. bei einer Verbindung von MnB-Stahl mit mikrolegiertem Stahl) umwandeln lässt, wobei das Schweißverfahren vergleichsweise kostengünstig sein und eine optimierte Schweißnahtgeometrie bieten soll.

Zur Lösung dieser Aufgabe wird ein Verfahren mit den in Anspruch 1 angegebenen Merkmalen vorgeschlagen. Bevorzugte und vorteilhafte Ausgestaltungen des erfindungsgemäßen Verfahrens sind in den Unteransprüchen angegeben.

Das erfindungsgemäße Verfahren dient der Herstellung eines maßgeschneiderten warmumformbaren Blechhalbzeugs. Bei dem Verfahren werden mindestens zwei Stahlbleche unterschiedlicher Werkstoffgüte und/oder Dicke im Stumpfstoß durch Laserschweißen gefügt, wobei mindestens eines der Stahlbleche aus presshärtbarem Stahl, vorzugsweise Mangan-Bor-Stahl gefertigt ist und eine metallische Beschichtung auf Aluminium- oder Aluminium-Silizium-Basis aufweist. Das Laserschweißen erfolgt unter Zuführen von Zusatzdraht in die ausschließlich mittels mindestens eines Laserstrahls erzeugte Schweißschmelze, wobei der Zusatzdraht im Wesentlichen aluminiumfrei ist und mindestens ein die Bildung von Austenit begünstigendes Legierungselement enthält, das mit einem um mindestens 0,1 Gew.-% größeren Massenanteil im Zusatzdraht vorhanden ist als in dem presshärtbaren Stahl, und wobei der Zusatzdraht vor dem Zuführen in die Schweißschmelze mittels einer Heizvorrichtung erwärmt wird. Das erfindungsgemäße Verfahren ist zudem dadurch gekennzeichnet, dass die Stahlbleche mit einem von ihren miteinander zu verschweißenden Kanten begrenzten, von mindestens 0,15 mm aufweisenden Spalt aneinander geschweißt werden, wobei die Stahlbleche so positioniert werden, dass der von ihren miteinander zu verschweißenden Kanten begrenzte Spalt eine durchschnittliche Breite im Bereich von 0,15 mm bis 0,5 mm aufweist, wobei in den Spalt so viel Material des Zusatzdrahtes eingebracht wird, dass das Verhältnis von in den Spalt eingebrachtem Zusatzdrahtvolumen zu dem Volumen des mittels des mindestens einen Laserstrahls aufgeschmolzenen Stahlblechmaterials im Bereich von 30 bis 60% liegt, wobei der Zusatzdraht mit einer Geschwindigkeit zugeführt wird, die geringer als die Laserschweißgeschwindigkeit ist und im Bereich bis minimal 70% der Laserschweißgeschwindigkeit liegt, und wobei die Laserschweißgeschwindigkeit mindestens 6 m/min beträgt.

Unter einem aluminiumfreien oder im Wesentlichen aluminiumfreien Zusatzdraht wird im Kontext der Erfindung ein Zusatzdraht verstanden, der bis auf unvermeidbare Verunreinigungen oder unvermeidbare Spurenanteile kein Aluminium enthält.

Bei dem erfindungsgemäßen Laserschweißverfahren ist ein vorheriges Entschichten des Randes des eine metallische Beschichtung auf Aluminium- oder Aluminium-Silizium-Basis aufweisenden Stahlblechs nicht erforderlich und dementsprechend auch nicht vorgesehen. Aufgrund des Wegfalls des randseitigen Entschichtens (Abtragens) der metallischen Beschichtung ist das erfindungsgemäße Verfahren deutlich kostengünstiger als das bekannte Verfahren gemäß der EP 2 007 545 B1.

Da die Stahlbleche erfindungsgemäß mit einem Spalt gefügt werden, der eine durchschnittliche Breite von mindestens 0,15 mm, vorzugsweise mindestens 0,18 mm, besonders bevorzugt mindestens 0,2 mm aufweist, wobei der Laserstrahldurchmesser bzw. die Laserstrahlbreite an der Auftreffstelle auf den Fügestoß im Vergleich zu dem üblichen Laserstrahldurchmesser im Wesentlichen unverändert bleibt, wird sichergestellt, dass weniger Material der Stahlbleche und damit auch weniger Volumen der aluminiumhaltigen Beschichtung aufgeschmolzen wird und in die Schweißschmelze einfließt. Der durch Positionieren der Bleche eingestellte Spalt wird mit dem aufgeschmolzenen Material des im Wesentlichen aluminiumfreien Zusatzdrahtes aufgefüllt. Weiterhin führt das Einbringen des Zusatzdrahtes zu einer besseren Homogenisierung der Schweißschmelze, d.h. das in die Schmelze aus der metallischen Beschichtung einfließende Aluminiumvolumen wird erheblich reduziert und sehr homogen oder nahezu homogen verteilt. Erfindungsgemäß wird in den Spalt so viel Material des Zusatzdrahtes eingebracht, dass das Verhältnis von in den Spalt eingebrachtem Zusatzdrahtvolumen zu dem Volumen des mittels Laserstrahls aufgeschmolzenen Stahlblechmaterials mindestens 30 %, vorzugsweise mindestens 35%, besonders bevorzugt mindestens 40%, und nicht mehr als 60% beträgt.

Die durchschnittliche Breite des Spaltes wird gemäß der Erfindung nicht größer als 0,5 mm eingestellt. Somit kann das erfindungsgemäße Verfahren mit einer herkömmlichen Laserstrahlschweißoptik durchgeführt werden, da der Durchmesser bzw. die Breite des Laserstrahls an der Auftreffstelle auf dem Fügestoß möglichst unverändert bleiben soll. Eine geringere mittlere Breite des Spaltes und das Schweißen ausschließlich mittels Laserstrahlung ermöglichen eine schmale Schweißnaht mit wenig Naht- und Wurzelüberhöhung im Vergleich zu der relativ breiten Schweißnaht beim Laser-Lichtbogen-Hybridschweißen. Aus den gleichen Gründen sollte das Verhältnis von in den Spalt eingebrachtem Zusatzdrahtvolumen zu dem Volumen des mittels des mindestens einen Laserstrahls aufgeschmolzenen Stahlblechmaterials nicht größer als 60 % sein.

Der in dem erfindungsgemäßen Verfahren verwendete Zusatzdraht ist im Wesentlichen aluminiumfrei und enthält mindestens ein die Bildung von Austenit begünstigendes Legierungselement, das mit einem um mindestens 0,1 Gew.-%, vorzugsweise mindestens 0,2 Gew.-% größeren Massenanteil im Zusatzdraht vorhanden ist als in dem presshärtbaren Stahl. Durch die Zugabe eines oder mehrerer die Bildung von Austenit begünstigenden Legierungselementen wird die Härtbarkeit der Schweißnaht verbessert. Vorzugsweise enthält der Zusatzdraht zumindest Mangan und/oder Nickel als die Bildung von Austenit begünstigende bzw. Austenit stabilisierende Legierungselemente.

Eine weitere bevorzugte Ausgestaltung des erfindungsgemäßen Verfahrens sieht vor, dass der darin verwendete Zusatzdraht folgende Zusammensetzung aufweist: 0,05 bis 0,15 Gew.-% C, 0,5 bis 2,0 Gew.-% Si, 1,0 bis 3,0 Gew.-% Mn, 0,5 bis 2,0 Gew.-% Cr + Mo, und 1,0 bis 4,0 Gew.-% Ni, Rest Fe und unvermeidbare Verunreinigungen. Interne Versuche haben ergeben, dass sich mit einem solchen Zusatzdraht unter Anwendung des erfindungsgemäßen Verfahrens sehr zuverlässig eine vollständige Umwandlung der Schweißnaht in ein martensitisches Gefüge (z.B. für eine MnB-MnB-Verbindung) oder ein Mischgefüge (z.B. für eine Verbindung von MnB-Stahl mit mikrolegiertem Stahl) beim anschließenden Warmumformen (Presshärten) des Tailored Blanks sicherstellen lässt.

Nach einer weiteren bevorzugten Ausgestaltung des erfindungsgemäßen Verfahrens hat der darin verwendete Zusatzdraht einen um mindestens 0,1 Gew.-% geringeren Kohlenstoff-Massenanteil als der presshärtbare Stahl von mindestens einem der miteinander zu verschweißenden Bleche. Hierdurch kann eine Versprödung der Schweißnaht verhindert werden. Insbesondere lässt sich durch den relativ niedrigen Kohlenstoffgehalt des Zusatzdrahtes eine gute Restdehnbarkeit der Schweißnaht erzielen.

Erfindungsgemäß wird der Zusatzdraht vor dem Zuführen in die Schweißschmelze mittels einer Heizvorrichtung erwärmt. Beispielsweise wird der Zusatzdraht vor dem Zuführen (Einfließen) in die Schmelze mittels der Heizvorrichtung auf eine Temperatur von mindestens 60°C, vorzugsweise auf mindestens 100°C, besonders bevorzugt auf mindestens 150°C, insbesondere mindestens 180°C erhitzt. Hierdurch ist im Vergleich zur Verwendung eines nicht erhitzten Zusatzdrahtes eine deutlich höhere Schweißgeschwindigkeit möglich. Denn die Spitze des erhitzten Zusatzdrahtes lässt sich mit dem Laserstrahl schneller schmelzen. Darüber hinaus wird der Schweißprozess durch das Erhitzen des Zusatzdrahtes vor dem Zuführen in die Schweißschmelze stabiler.

Die Schweißgeschwindigkeit bzw. die Geschwindigkeit, mit der die miteinander im Stumpfstoß zu verschweißenden Stahlbleche relativ zu dem Laserstrahl bewegt werden, liegt bei dem erfindungsgemäßen Verfahren bei mindestens 6 m/min, besonders bevorzugt bei mindestens 9 m/min.

Um den Zusatzdraht schnell und effizient zu erhitzen, wird in dem erfindungsgemäßen Verfahren vorzugsweise eine Heizvorrichtung verwendet, die den Zusatzdraht vor dem Zuführen in die Schweißschmelze induktiv, elektrisch, konduktiv oder durch Wärmestrahlung erhitzt. Die elektrische Erhitzung des Zusatzdrahtes erfolgt dabei vorzugsweise so, dass ein elektrischer Strom über Kontakte durch den Zusatzdraht geleitet wird. Die Geschwindigkeit, mit welcher der Zusatzdraht zugeführt wird, ist geringer als die Laserschweißgeschwindigkeit und liegt im Bereich bis minimal 70% der Laserschweißgeschwindigkeit.

Im Vergleich zum Laserstrahlschweißen nach vorherigem Entschichten der Ränder der im Stumpfstoß zu verschweißenden beschichteten Stahlbleche erzielt das erfindungsgemäße Verfahren eine optimierte Schweißnahtgeometrie, nämlich einen größeren tragenden Blechkantenquerschnitt. Dies ist insbesondere bei späteren dynamischen Belastungen der Schweißnaht von Vorteil.

Vorzugsweise wird ein Mangan-Bor-Stahl als presshärtbarer Stahl verwendet. In einer bevorzugten Ausgestaltung des erfindungsgemäßen Verfahrens wird mindestens eines der miteinander im Stumpfstoß zu verschweißenden Stahlbleche so ausgewählt, dass es einen presshärtbaren Stahl folgender Zusammensetzung aufweist: 0,10 bis 0,50 Gew.-% C, max. 0,40 Gew.-% Si, 0,50 bis 2,00 Gew.-% Mn, max. 0,025 Gew.-% P, max. 0,010 Gew.-% S, max. 0,60 Gew.-% Cr, max. 0,50 Gew.-% Mo, max. 0,050 Gew.-% Ti, 0,0008 bis 0,0070 Gew.-% B, und min. 0,010 Gew.-% Al, Rest Fe und unvermeidbare Verunreinigungen. Die aus einem solchen Stahlblech gefertigten Bauteile weisen nach einem Presshärten eine relativ hohe Zugfestigkeit auf.

Bleche aus unterschiedlichen oder identischen Mangan-Bor-Stählen können auch mit dem erfindungsgemäßen Verfahren verschweißt werden, um maßgeschneiderte, durch ein Presshärten maximierte Festigkeiten aufweisende Blechhalbzeuge bereitzustellen.

Eine weitere vorteilhafte Ausgestaltung des erfindungsgemäßen Verfahrens ist dadurch gekennzeichnet, dass mindestens eines der Stahlbleche nicht presshärtbar ist und beispielsweise aus mikrolegiertem Stahl gefertigt ist. Durch die Kombination eines Blechs aus presshärtbarem Stahl, wie etwa Mangan-Bor-Stahl, mit einem Blech aus mikrolegiertem Stahl lässt sich in einem Karosseriebauteil, z.B. einer B-Säule, örtlich eine sehr unterschiedliche Zugfestigkeit bzw. Duktilität einstellen. Der mikrolegierte Stahl weist dabei vorzugsweise folgende Zusammensetzung auf: 0,05 bis 0,15 Gew.-% C, max. 0,35 Gew.-% Si, 0,40 bis 1,20 Gew.-% Mn,max. 0,030 Gew.-% P, max. 0,025 Gew.-% S, 0,01 bis 0,12 Gew.-% Nb, 0,02 bis 0,18 Gew.-% Ti, 0,0008 bis 0,0070 Gew.-% B, und mindestens 0,010 Gew.-% Al, Rest Fe und unvermeidbare Verunreinigungen. Ein solcher Stahl zeichnet sich durch eine hohe Bruchdehnung Aso von mindestens 21% aus.

Die in dem erfindungsgemäßen Verfahren verwendeten Stahlbleche weisen einschließlich der metallischen Beschichtung eine Blechdicke im Bereich von beispielsweise 0,6 bis 3,0 mm auf.

Nach einer weiteren vorteilhaften Ausgestaltung des erfindungsgemäßen Verfahrens ist der mindestens eine Laserstrahl ein Linienfokusstrahl, der derart auf die miteinander zu verschweißenden Kanten der Stahlbleche gerichtet wird, dass die Längsachse des auf die Kanten auftreffenden Linienfokusstrahls im Wesentlichen parallel zu den Kanten verläuft. Durch den Linienfokus bleibt die Schweißschmelze vor dem Erstarren länger flüssig. Dies trägt ebenfalls zu einer besseren Durchmischung (Homogenisierung) der Schweißschmelze bei. Die Länge des Linienfokus kann beispielsweise im Bereich von 1,2 bis 2,0 mm liegen.

Um eine Versprödung der Schweißnaht zu verhindern, sieht eine weitere Ausgestaltung des erfindungsgemäßen Verfahrens vor, dass die Schweißschmelze während des Laserschweißens mit Schutzgas (Inertgas) beaufschlagt wird. Vorzugsweise wird dabei als Schutzgas reines Argon, Helium, Stickstoff oder ein Gemisch aus Argon, Helium, Stickstoff und/oder Kohlendioxid und/oder Sauerstoff verwendet.

Nachfolgend wird die Erfindung anhand einer Ausführungsbeispiele darstellenden Zeichnung näher erläutert. Es zeigen schematisch:
- Fig. 1: eine perspektivische Darstellung von Teilen einer Vorrichtung zur Durchführung des erfindungsgemäßen Laserschweißverfahrens, wobei zwei im Wesentlichen gleich dicke Stahlpatinen, die sich hinsichtlich ihrer Werkstoffgüte voneinander unterscheiden, im Stumpfstoß miteinander verschweißt werden;
- Fig. 2: eine Querschnittansicht eines Abschnitts der miteinander verschweißten Stahlplatinen aus Fig. 1;
- Fig. 3: eine perspektivische Darstellung von Teilen einer Vorrichtung zur Durchführung des erfindungsgemäßen Laserschweißverfahrens, wobei hier zwei unterschiedlich dicke Stahlpatinen mit unterschiedlicher Werkstoffgüte im Stumpfstoß miteinander verschweißt werden; und
- Fig. 4: eine Querschnittansicht eines Abschnitts der miteinander verschweißten Stahlplatinen aus Fig. 3.

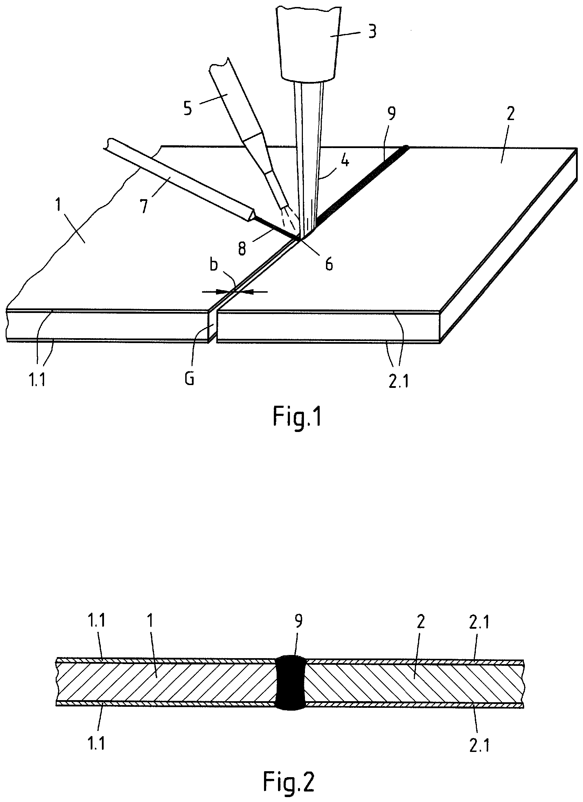

Fig. 1 zeigt schematisch Teile einer Laserschweißvorrichtung, mit der das erfindungsgemäße Laserschweißverfahren durchgeführt werden kann. Die Vorrichtung umfasst eine Unterlage bzw. verfahrbare Trägerplatte (nicht gezeigt), auf der zwei Platinen oder Bleche 1, 2 aus Stahl unterschiedlicher Werkstoffgüte angeordnet sind. Eines der Bleche 1, 2 ist aus presshärtbarem Stahl, vorzugsweise aus Mangan-Bor-Stahl hergestellt, während das andere Blech 2 oder 1 aus einer relativ weichen Tiefziehgüte, vorzugsweise aus einem mikrolegierten Stahl hergestellt ist.

Der presshärtbare Stahl kann beispielsweise folgende chemische Zusammensetzung aufweisen:
max. 0,4 Gew.-% C,
max. 0,4 Gew.-% Si,
max. 2,0 Gew.-% Mn,
max. 0,025 Gew.-% P,
max. 0,010 Gew.-% S,
max. 0,8 Gew.-% Cr + Mo,
max. 0,05 Gew.-% Ti,
max. 0,007 Gew.-% B, und
min. 0,015 Gew.-% Al,
Rest Fe und unvermeidbare Verunreinigungen.

Im Lieferzustand, d.h. vor einer Wärmebehandlung und schnellen Abkühlung, beträgt die Streckgrenze Re des presshärtbaren Stahlblechs 1 oder 2 vorzugsweise mindestens 300 MPa, seine Zugfestigkeit Rm beträgt mindestens 480 MPa, und seine Bruchdehnung A₈₀ liegt im Bereich von 10 bis 15%. Nach dem Warmumformen (Presshärten), d.h. einem Erwärmung auf Austenitisierungstemperatur von ca. 900 bis 920°C und anschließendem schnellen Abkühlen, weist dieses Stahlblech 1 oder 2 eine Streckgrenze Re von ca. 1.100 MPa, eine Zugfestigkeit Rm von ca. 1.500 bis 2.000 MPa, und eine Bruchdehnung Aso von ca. 5 % auf.

Der Stahl des Blechs 2 oder 1 mit relativ weicher Tiefziehgüte bzw. der mikrolegierte Stahl weist dagegen beispielsweise folgende chemische Zusammensetzung auf:
max. 0,1 Gew.-% C,
max. 0,35 Gew.-% Si,
max. 1,0 Gew.-% Mn,
max. 0,030 Gew.-% P,
max. 0,025 Gew.-% S,
max. 0,10 Gew.-% Nb,
max. 0,15 Gew.-% Ti,
max. 0,007 Gew.-% B, und
min. 0,015 Gew.-% Al,
Rest Fe und unvermeidbare Verunreinigungen.

Zumindest eines der Bleche 1, 2 weist eine metallische Beschichtung 1.1, 2.1 auf Aluminium- oder Aluminium-Silizium-Basis auf. In dem in Fig. 1 skizzierten Beispiel sind beide Bleche 1, 2 mit einer solchen Beschichtung 1.1, 2.1 versehen. Die Beschichtung 1.1, 2.1 kann typischerweise durch einen kontinuierlichen Schmelztauchbeschichtungsprozess auf ein Stahlband aufgebracht werden, aus dem anschließend die Bleche 1, 2 durch Zuschneiden erlangt werden.

Die in Fig. 1 dargestellten Bleche 1, 2 sind im Wesentlich gleich dick. Die Dicke der Bleche 1, 2, einschließlich der Beschichtung 1.1, 2.1 liegt beispielsweise im Bereich von 0,6 bis 3,0 mm. Die Dicke der Beschichtung 1.1, 2.1 auf der jeweiligen Ober- oder Unterseite des Blechs 1, 2 liegt beispielsweise im Bereich von ca. 10 bis 120 µm, und beträgt vorzugsweise weniger oder gleich 50 µm.

Oberhalb der Bleche 1, 2 ist ein Abschnitt eines Laserschweißkopfes 3 skizziert, der mit einer Optik (nicht gezeigt) zur Zuführung eines Laserstrahls 4 sowie einer Fokussiereinrichtung zur Bündelung des Laserstrahls 4 versehen ist. Des Weiteren ist an dem Laserschweißkopf 3 eine Leitung 5 zur Zuführung von Schutzgas angeordnet. Die Mündung der Schutzgasleitung 5 ist im Wesentlichen auf den Fokusbereich des Laserstrahls 4 bzw. die mittels des Laserstrahls 4 erzeugte Schweißschmelze 6 gerichtet. Als Schutzgas wird vorzugsweise reines Argon oder ein Gemisch aus Argon mit Helium und/oder Kohlendioxid verwendet.

Zudem ist dem Laserschweißkopf 3 eine Drahtzuführungseinrichtung 7 zugeordnet, mittels welcher der Schweißschmelze 6 ein spezielles Zusatzmaterial in Form eines Drahtes 8 zugeführt wird, welches ebenfalls mittels des Laserstrahls 4 aufgeschmolzen wird. Die Schweißnaht ist mit 9 bezeichnet. Der Zusatzdraht 8 ist im Wesentlichen aluminiumfrei und enthält mindestens ein die Bildung von Austenit begünstigendes bzw. Austenit stabilisierendes Legierungselement, vorzugsweise Mangan und/oder Nickel.

Die Platinen oder Bleche 1, 2 werden im Stumpfstoß mit einem Spalt G gefügt, dessen Breite mindestens 0,15 mm, vorzugsweise mindestens 0,2 mm beträgt. Die durchschnittliche Breite b des von den miteinander zu verschweißenden Blechkanten begrenzten Spalts G liegt im Bereich von 0,15 bis 0,5 mm. Die Aluminium- oder Aluminium-Silizium-Beschichtung 1.1, 2.1 erstreckt sich bei dem beschichteten Stahlblech 1 und/oder 2 bis zu der im Stumpfstoß zu verschweißenden Blechkante. Das Verschweißen der Bleche 1, 2 erfolgt also ohne (vorherige) Entschichtung des Randes der zu verschweißenden Blechkante.

Die Fokussiereinrichtung bündelt den Laserstrahl 4 zu einem im Wesentlichen punkt- oder kreisförmigen Fokus oder vorzugsweise zu einem Linienfokus. Der Durchmesser bzw. die Breite des Laserstrahls 4 an der Auftreffstelle auf die Bleche 1, 2 liegt im Bereich von etwa 0,7 bis 0,9 mm. Durch den relativ breiten Spalt G, dessen Breite b mindestens 0,15 mm beträgt und beispielsweise im Bereich von 0,25 bis 0,5 mm liegen kann, wird gewährleistet, dass weniger Material der Bleche 1, 2 und damit auch weniger Volumen der aluminiumhaltigen Beschichtung 1.1, 2.1 aufgeschmolzen wird und in die Schmelze 6 einfließt. Der Spalt G wird mit dem geschmolzenen Material des Zusatzdrahtes 8, der im festen Zustand einen Durchmesser im Bereich von ca. 0,8 bis 1,2 mm aufweist, aufgefüllt. Die Einbringung des Zusatzdrahtmaterials in den Spalt G führt zu einer erheblichen Verdünnung sowie homogenen Verteilung des aus dem aufgeschmolzenen Rand der Beschichtung 1.1, 2.1 in die Schmelze 6 einfließenden Aluminiums. Das Verhältnis von in den Spalt G eingebrachtem Zusatzdrahtvolumen zu dem Volumen des mittels des Laserstrahls 4 aufgeschmolzenen Stahlblechmaterials liegt im Bereich von 30 bis 60 %.

Der Zusatzdraht 8 weist beispielsweise folgende chemische Zusammensetzung auf:
0,1 Gew.-% C,
0,9 Gew.-% Si,
2,2 Gew.-% Mn,
0,4 Gew.-% Cr,
0,6 Gew.-% Mo, und
2,2 Gew.-% Ni,
Rest Fe und unvermeidbare Verunreinigungen.

Der Mangan-Gehalt des Zusatzdrahtes 8 ist dabei höher als der Mangan-Gehalt des presshärtbaren Stahlblechs. Vorzugsweise liegt der Mangan-Gehalt des Zusatzdrahtes 8 um mindestens 0,2 Gew.-% höher als der Mangan-Gehalt des presshärtbaren Stahlblechs. Auch ist es vorteilhaft, wenn auch der Gehalt an Chrom und Molybdän des Zusatzdrahtes 8 höher als in dem presshärtbaren Stahlblech 1 oder 2 ist. Vorzugsweise liegt der kombinierte Chrom-Molybdän-Gehalt des Zusatzdrahtes 8 um mindestens 0,1 Gew.-% höher als der kombinierte Chrom-Molybdän-Gehalt des presshärtbaren Stahlblechs 1 oder 2. Der Nickel-Gehalt des Zusatzdrahtes 8 liegt vorzugsweise im Bereich von 1,0 bis 4,0 Gew.-%, insbesondere im Bereich von 2,0 bis 2,5 Gew.-%. Ferner weist der Zusatzdraht 8 vorzugsweise einen geringeren Kohlenstoff-Gehalt auf als das presshärtbare Stahlblech 1 oder 2. Der Kohlenstoff-Gehalt des Zusatzdrahtes 8 liegt vorzugsweise im Bereich von 0,05 bis 0,15 Gew.-%.

Der Zusatzdraht 8 wird der durch den Laserstrahl 4 erzeugten Schmelze 6 in erhitztem Zustand zugeführt. Hierzu ist die Drahtzuführungseinrichtung 7 mit einer Heizvorrichtung (nicht gezeigt) ausgerüstet, die den Zusatzdraht 8 vorzugsweise induktiv, elektrisch, konduktiv oder durch Wärmestrahlung erhitzt. Der so erhitzte Abschnitt des Zusatzdrahtes 8 weist eine Temperatur von beispielsweise mindestens 60°C, vorzugsweise mindestens 150°C, besonders bevorzugt mindestens 180°C auf.

Bei der Laserquelle der Laserschweißvorrichtung handelte es sich hinsichtlich des Lasertyps beispielsweise um einen CO₂-Laser; Diodenlaser oder Faserlaser. Die Laserquelle liefert während des Schweißprozesses eine Streckenenergie von mindestens 0,3 kJ/cm bei einer Laserleistung von mindestens 7 kW. Die Schweißgeschwindigkeit liegt beispielsweise im Bereich von 6 bis 9 m/min oder vorzugsweise oberhalb von 8 m/min. Der Zusatzdraht 8 wird dabei mit einer Geschwindigkeit zugeführt, die geringer als die Laserschweißgeschwindigkeit ist und im Bereich bis minimal 70% der Laserschweißgeschwindigkeit liegt.

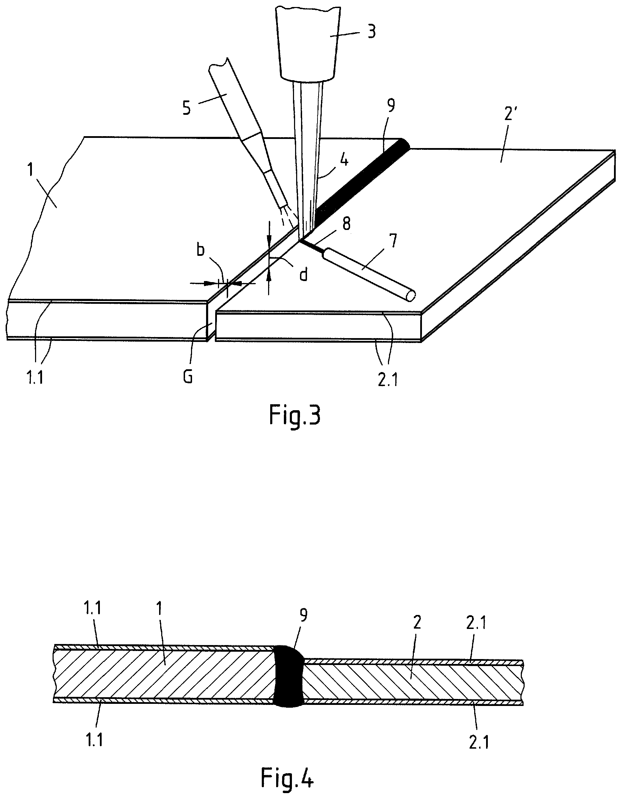

Das in den Figuren 3 und 4 dargestellte Ausführungsbeispiel unterscheidet sich von dem Ausführungsbeispiel in den Figuren 1 und 2 dadurch, dass die Stahlbleche 1, 2' verschieden dick sind, so dass sich an dem Stumpfstoß ein Dickensprung d von mindestens 0,2 mm ergibt. Beispielsweise besitzt das presshärtbare Stahlblech 1 eine Blechdicke im Bereich von 0,5 mm bis 1,2 mm, während das Blech 2' aus mikrolegiertem Stahl bzw. relativ duktilem Stahl eine Blechdicke im Bereich von 1,4 mm bis 3,0 mm aufweist.

## Patentansprüche

1. Verfahren zur Herstellung eines maßgeschneiderten warmumformbaren Blechhalbzeugs, bei dem mindestens zwei Stahlbleche (1, 2, 2') unterschiedlicher Werkstoffgüte und/oder Dicke im Stumpfstoß durch Laserschweißen gefügt werden, wobei mindestens eines der Stahlbleche (1, 2, 2') aus presshärtbarem Stahl gefertigt ist und eine metallische Beschichtung (1.1, 2.1) auf Aluminium- oder Aluminium-Silizium-Basis aufweist, wobei das Laserschweißen unter Zuführen von Zusatzdraht (8) in die ausschließlich mittels mindestens eines Laserstrahls (4) erzeugte Schweißschmelze (6) erfolgt, wobei der Zusatzdraht im (8) Wesentlichen aluminiumfrei ist und mindestens ein die Bildung von Austenit begünstigendes Legierungselement enthält, das mit einem um mindestens 0,1 Gew.-% größeren Massenanteil im Zusatzdraht (8) vorhanden ist als in dem presshärtbaren Stahl, und **dadurch gekennzeichnet, dass** der Zusatzdraht (8) vor dem Zuführen in die Schweißschmelze (6) mittels einer Heizvorrichtung erwärmt wird, wobei die Stahlbleche (1, 2, 2') mit einem von ihren miteinander zu verschweißenden Kanten begrenzten Spalt (G) aneinander geschweißt werden, wobei die Stahlbleche (1, 2, 2') so positioniert werden, dass der von ihren miteinander zu verschweißenden Kanten begrenzte Spalt (G) eine durchschnittliche Breite (b) im Bereich von 0,15 mm bis 0,5 mm aufweist, und dass in den Spalt (G) so viel Material des Zusatzdrahtes (8) eingebracht wird, dass das Verhältnis von in den Spalt (G) eingebrachtem Zusatzdrahtvolumen zu dem Volumen des mittels des mindestens einen Laserstrahls (4) aufgeschmolzenen Stahlblechmaterials im Bereich von 30 bis 60 % liegt, wobei der Zusatzdraht (8) mit einer Geschwindigkeit zugeführt wird, die geringer als die Laserschweißgeschwindigkeit ist und im Bereich bis minimal 70% der Laserschweißgeschwindigkeit liegt, und wobei die Laserschweißgeschwindigkeit mindestens 6 m/min beträgt.

2. Verfahren nach Anspruch 1, **dadurch gekennzeichnet, dass** der Zusatzdraht (8) vor dem Zuführen in die Schweißschmelze (6) mittels der Heizvorrichtung, induktiv, elektrisch, konduktiv oder durch Wärmestrahlung erhitzt wird.

3. Verfahren nach Anspruch 1 oder 2, **dadurch gekennzeichnet, dass** der Zusatzdraht (8) vor dem Zuführen in die Schweißschmelze (6) mittels der Heizvorrichtung auf eine Temperatur von mindestens 100°C erhitzt wird.

4. Verfahren nach einem der Ansprüche 1 bis 3, **dadurch gekennzeichnet, dass** der presshärtbare Stahl ein Mangan-Bor-Stahl ist.

5. Verfahren nach einem der Ansprüche 1 bis 4, **dadurch gekennzeichnet, dass** der presshärtbare Stahl folgende Zusammensetzung aufweist:
0,10 - 0,50 Gew.-% C,
max. 0,40 Gew.-% Si,
0,50 - 2,0 Gew.-% Mn,
max. 0,025 Gew.-% P,
max. 0,010 Gew.-% S,
max. 0,60 Gew.-% Cr,
max. 0,50 Gew.-% Mo,
max. 0,050 Gew.-% Ti,
0,0008 - 0,0070 Gew.-% B, und
min. 0,010 Gew.-% Al,
Rest Fe und unvermeidbare Verunreinigungen.

6. Verfahren nach einem der Ansprüche 1 bis 5, **dadurch gekennzeichnet, dass** mindestens eines der Stahlbleche (1, 2, 2') aus mikrolegiertem Stahl gefertigt ist.

7. Verfahren nach Anspruch 6, **dadurch gekennzeichnet, dass** der mikrolegierte Stahl folgende Zusammensetzung aufweist:
0,05 - 0,15 Gew.-% C,
max. 0,35 Gew.-% Si,
0,40 - 1,20 Gew.-% Mn,
max. 0,030 Gew.-% P,
max. 0,025 Gew.-% S,
0,01- 0,12 Gew.-% Nb,
0,02 - 0,18 Gew.-% Ti,
0,0008 - 0,0070 Gew.-% B, und
min. 0,010 Gew.-% Al,
Rest Fe und unvermeidbare Verunreinigungen.

8. Verfahren nach einem der Ansprüche 1 bis 7, **dadurch gekennzeichnet, dass** der mindestens eine Laserstrahl (4) in Form eines Linienfokusstrahls derart auf die miteinander zu verschweißenden Kanten der Stahlbleche (1, 2, 2') gerichtet wird, dass die Längsachse des auf die Kanten auftreffenden Linienfokusstrahls im Wesentlichen parallel zu den Kanten verläuft.

9. Verfahren nach einem der Ansprüche 1 bis 8, **dadurch gekennzeichnet, dass** der Zusatzdraht (8) zumindest Mangan und/oder Nickel als die Bildung von Austenit begünstigende Legierungselemente enthält.

10. Verfahren nach einem der Ansprüche 1 bis 9, **dadurch gekennzeichnet, dass** der Zusatzdraht (8) folgende Zusammensetzung aufweist:
0,05 - 0,15 Gew.-% C,
0,5 - 2,0 Gew.-% Si,
1,0 - 3,0 Gew.-% Mn,
0,5 - 2,0 Gew.-% Cr + Mo, und
1,0 - 4,0 Gew.-% Ni,
Rest Fe und unvermeidbare Verunreinigungen.

11. Verfahren nach einem der Ansprüche 1 bis 10, **dadurch gekennzeichnet, dass** der Zusatzdraht (8) einen um mindestens 0,1 Gew.-% geringeren Kohlenstoff-Massenanteil als der presshärtbare Stahl aufweist.

12. Verfahren nach einem der Ansprüche 1 bis 11, **dadurch gekennzeichnet, dass** die Schweißschmelze (6) während des Laserschweißens mit Schutzgas beaufschlagt wird.

13. Verfahren nach Anspruch 12, **dadurch gekennzeichnet, dass** als Schutzgas reines Argon oder ein Gemisch aus Argon und Kohlendioxid verwendet wird.

## Claims

1. Method for producing a tailor-made semi-finished sheet metal product that can be hot formed, in which at least two steel sheets (1, 2, 2') of different material grades and/or thicknesses are joined in a butt joint by means of laser welding, at least one of the steel sheets (1, 2, 2') being made from press-hardenable steel and comprising a metallic coating (1.1, 2. 1) based on aluminium or aluminium-silicon, the laser welding being carried out while filler wire (8) is fed into the weld melt (6) produced exclusively by means of at least one laser beam (4), the filler wire (8) being substantially free of aluminium and containing at least one alloy element which promotes the formation of austenite and which is present in the filler wire (8) with a mass fraction which is at least 0.1 wt. % by weight greater than that in the press-hardenable steel, and **characterized in that** the filler wire (8) is heated by means of a heating device before being fed into the weld melt (6), the steel sheets (1, 2, 2') being welded to one another with a gap (G) delimited by their edges to be welded together, the steel sheets (1, 2, 2') being positioned in such a way that the gap (G) delimited by their edges to be welded together has an average width (b) in the range of from 0.15 mm to 0.5 mm, and **in that** so much material of the filler wire (8) is introduced into the gap (G) that the ratio of the volume of filler wire introduced into the gap (G) to the volume of the steel sheet material melted by means of the at least one laser beam (4) is in the range of from 30 to 60%, the filler wire (8) being fed at a speed which is lower than the laser welding speed and is in the range of up to at least 70% of the laser welding speed, and the laser welding speed being at least 6 m/min.

2. Method according to claim 1, **characterized in that** the filler wire (8) is heated by means of the heating device, inductively, electrically, conductively or by thermal radiation before being fed into the weld melt (6).

3. Method according to claim 1 or 2, **characterized in that** the filler wire (8) is heated by means of the heating device to a temperature of at least 100°C before being fed into the weld melt (6).

4. Method according to any one of claims 1 to 3, **characterized in that** the press-hardenable steel is a manganese-boron steel.

5. Method according to any one of claims 1 to 4, **characterized in that** the press-hardenable steel has the following composition:
0.10 - 0.50 wt.% C,
max. 0.40 wt.% Si,
0.50 - 2.0 wt.% Mn,
max. 0.025 wt.% P,
max. 0.010 wt.% S,
max. 0.60 wt.% Cr,
max. 0.50 wt.% Mo,
max. 0.050 wt.% Ti,
0.0008 - 0.0070 wt.% B, and
min. 0.010 wt.% AI,
balance Fe and unavoidable impurities.

6. Method according to any one of claims 1 to 5, **characterized in that** at least one of the steel sheets (1, 2, 2') is made of microalloyed steel.

7. Method according to claim 6, **characterized in that** the microalloyed steel has the following composition:
0.05 - 0.15 wt.% C,
max. 0.35 wt.% Si,
0.40 -1.20 wt.% Mn,
max. 0.030 wt.% P,
max. 0.025 wt.% S,
0.01 - 0.12 wt.% Nb,
0.02 - 0.18 wt.% Ti,
0.0008 - 0.0070 wt.% B, and
min. 0.010 wt.% Al,
balance Fe and unavoidable impurities.

8. Method according to any one of claims 1 to 7, **characterized in that** the at least one laser beam (4) in the form of a line focus beam is directed onto the edges of the steel sheets (1, 2, 2') to be welded together in such a way that the longitudinal axis of the line focus beam impinging on the edges extends substantially parallel to the edges.

9. Method according to any one of claims 1 to 8, **characterized in that** the filler wire (8) contains at least manganese and/or nickel as the alloy elements that promote the formation of austenite.

10. Method according to any one of claims 1 to 9, **characterized in that** the filler wire (8) has the following composition:
0.05 - 0.15 wt.% C,
0.5 - 2.0 wt.% Si,
1.0 - 3.0 wt.% Mn,
0.5 - 2.0 wt.% Cr + Mo, and
1.0 - 4.0 wt.% Ni,
balance Fe and unavoidable impurities.

11. Method according to any one of claims 1 to 10, **characterized in that** the filler wire (8) has a carbon mass fraction that is at least 0.1 wt.% lower than that of the press-hardenable steel.

12. Method according to any one of claims 1 to 11, **characterized in that** the weld melt (6) is subjected to protective gas during laser welding.

13. Method according to claim 12, **characterized in that** pure argon or a mixture of argon and carbon dioxide is used as protective gas.

## Revendications

1. Procédé de fabrication d'un produit semi-fini en tôle taillé sur mesure et déformable à chaud, dans lequel au moins deux tôles d'acier (1, 2, 2') de qualité de matériau et/ou d'épaisseur différente(s) sont jointes bout à bout par soudage laser, dans lequel au moins une des tôles d'acier (1, 2, 2') est fabriquée en acier déformable à chaud et présente un revêtement métallique (1.1, 2.1) à base d'aluminium ou d'aluminium-silicium, dans lequel le soudage laser est effectué par amenée de fil de contact auxiliaire (8) dans la fonte de soudure (6) produite exclusivement au moyen d'au moins un faisceau laser (4), dans lequel le fil de contact supplémentaire (8) est essentiellement sans aluminium et contient au moins un élément d'alliage favorisant la formation d'austénite, qui est présent dans le fil de contact supplémentaire (8) dans un pourcentage en masse supérieur d'au moins 0,1 % en poids par rapport à l'acier déformable à chaud, **caractérisé en ce que**
le fil de contact supplémentaire (8) est chauffé au moyen d'un dispositif de chauffage avant d'être amené dans la fonte de soudure (6), dans lequel les tôles d'acier (1, 2, 2') sont soudées avec une fente (G) délimitée par leurs arêtes à souder ensemble, dans lequel les tôles d'acier (1, 2, 2') sont positionnées de telle façon que la fente (G) délimitée par leurs arêtes à souder ensemble présente une largeur moyenne (b) dans la plage de 0,15 mm à 0,5 mm et qu'il y a tant de matériau du fil de contact supplémentaire (8) intégré dans la fente (G) que le rapport du volume de fil de contact supplémentaire intégré dans la fente (G) au volume du matériau de tôle d'acier fondu au moyen de l'au moins un faisceau laser (4) est situé dans la plage de 30 à 60 %, dans lequel le fil de contact supplémentaire (8) est amené à une vitesse qui est inférieure à la vitesse de soudage laser et est située dans la plage jusqu'à au minimum 70 % de la vitesse de soudage laser, et dans lequel la vitesse de soudage laser est au moins de 6 m/min.

2. Procédé selon la revendication 1, **caractérisé en ce que** le fil de contact supplémentaire (8) est chauffé de manière inductive, électrique, conductive ou par rayonnement thermique au moyen du dispositif de chauffage, avant l'amenée dans la fonte de soudure (6).

3. Procédé selon la revendication 1 ou 2, **caractérisé en ce que** le fil de contact supplémentaire (8) est chauffé à une température d'au moins 100°C au moyen du dispositif de chauffage, avant l'amenée dans la fonte de soudure (6).

4. Procédé selon l'une des revendications 1 à 3, **caractérisé en ce que** l'acier déformable à chaud est un acier manganèse-bore.

5. Procédé selon l'une des revendications 1 à 4, **caractérisé en ce que** l'acier déformable à chaud présente la composition suivante :
0,10 - 0,50 % en poids de C,
max. 0,40 % en poids de Si,
0,50 - 2 % en poids de Mn,
max. 0,025 % en poids de P,
max. 0,010 % en poids de S,
max. 0,60 % en poids de Cr,
max. 0,50 % en poids de Mo,
max. 0,050 % en poids de Ti,
0,0008 - 0,0070 % en poids de B, et
min. 0,010 % en poids de AI,
le reste étant du Fe et des impuretés inévitables.

6. Procédé selon l'une des revendications 1 à 5, **caractérisé en ce qu'**au moins une des tôles d'acier (1, 2, 2') est fabriquée en acier micro-allié.

7. Procédé selon la revendication 6, **caractérisé en ce que** l'acier micro-allié présente la composition suivante :
0,05-0,15 % en poids de C,
max. 0,35 % en poids de Si,
0,40 - 1,20 % en poids de Mn,
max. 0,030 % en poids de P,
max. 0,025 % en poids de S,
0,01 - 0,12 % en poids de Nb,
0,02 - 0,18 % en poids de Ti,
0,0008 - 0,0070 % en poids de B, et
min. 0,010 % en poids d'Al,
le reste étant du Fe et des impuretés inévitables.

8. Procédé selon l'une des revendications 1 à 7, **caractérisé en ce que** l'au moins un faisceau laser (4) est dirigé sous forme d'un faisceau à raies de telle façon sur les arêtes à souder ensemble des tôles d'acier (1, 2, 2'), que l'axe longitudinal du faisceau à raies arrivant sur les arêtes est essentiellement parallèle aux arêtes.

9. Procédé selon l'une des revendications 1 à 8, **caractérisé en ce que** le fil de contact supplémentaire (8) contient au moins du manganèse et/ou du nickel en tant qu'éléments d'alliage favorisant la formation d'austénite.

10. Procédé selon l'une des revendications 1 à 9⁻, **caractérisé en ce que** le fil de contact supplémentaire (8) présente la composition suivante :
0,05 - 0,15 % en poids de C,
0,5 - 2,0 % en poids de Si,
1,0 - 3,0 % en poids de Mn,
0,5 - 2,0 % en poids de Cr + Mo, et
1,0 - 4,0 % en poids de Ni,
le reste étant du Fe et des impuretés inévitables.

11. Procédé selon l'une des revendications 1 à 10, **caractérisé en ce que** le fil de contact supplémentaire (8) présente un pourcentage en masse de carbone inférieur d'au moins 1 % en poids par rapport à l'acier déformable à chaud.

12. Procédé selon l'une des revendications 1 à 11, **caractérisé en ce que** la fonte de soudure (6) est alimentée en gaz protecteur pendant la soudure laser.

13. Procédé selon la revendication 12, **caractérisé en ce que** de l'argon pur ou un mélange d'argon et de dioxyde de carbone est employé en tant que gaz protecteur.
